# EUROPEAN PATENT SPECIFICATION

(11) **EP 3 509 420 B1**
(45) Date of publication and mention of the grant of the patent: **05.01.2022**
(21) Application number: 17758873.8
(22) Date of filing: 31.08.2017
(51) Int. Cl.: A01N 43/40, A01N 25/30, A01P 5/00

(54) **FORMULATIONS CONTAINING FLUOPYRAM FOR THE CONTROL OF NEMATODES**
FORMULIERUNGEN ENTHALTEND FLUOPYRAM ZUR BEKÄMPFUNG VON NEMATODEN
FORMULATIONS CONTENANT DU FLUOPYRAM POUR LUTTER CONTRE DES NÉMATODES

(30) Priority: 07.09.2016 EP 16187606
(43) Date of publication of application: 17.07.2019
(73) Proprietor: Bayer CropScience Aktiengesellschaft, 40789 Monheim am Rhein (DE)
(72) Inventor: MALCOLM, Faers, 40597 Düsseldorf (DE); FÜRSCH, Helmut, 42799 Leichlingen (DE)
(74) Representative: BIP Patents
(86) International application number: PCT/EP2017/071848
(87) International publication number: WO 2018/046381

(56) References cited:
- EP-A2- 1 060 667
- WO-A1-00/08931
- WO-A1-2012/072660
- HAAS S ET AL: "Influence of polymeric surfactants on pesticidal suspension concentrates: dispersing ability, milling efficiency and stabilization power", 20010101, no. 183-185, 1 January 2001 (2001-01-01), pages 785-793, XP001022097,

## Description

The present invention relates to new formulations of N-{[3-chloro-5-(trifluoromethyl)-2-pyridinyl]-ethyl}-2,6 dichlorobenzamide (fluopyram), a process for the preparation of these formulations and their use for controlling nematodes.

Nematodes are active, flexible, elongate organisms that live on moist surfaces or in liquid environments, including films of water within soil and moist tissues within other organisms. Many species of nematodes have evolved to be very successful parasites of plants and animals and, as a result, are responsible for significant economic losses in agriculture and livestock.

Plant-parasitic nematodes, a majority of which are root feeders, are found in association with most plants. Some are endoparasitic, living and feeding within the tissue of the roots, tubers, buds, seeds, etc. Others are ectoparasitic, feeding externally through plant walls. A single endoparasitic nematode can kill a plant or reduce its productivity. Endoparasitic root feeders include such economically important pests as the root-knot nematodes *(Meloidogyne* species), the reniform nematodes *(Rotylenchulus* species), the cyst nematodes *(Heterodera* species), and the root-lesion nematodes *(Pratylenchus* species). Direct feeding by nematodes can drastically decrease a plant's uptake of nutrients and water. Nematodes have the greatest impact on crop productivity when they attack the roots of seedlings immediately after seed germination. Nematode feeding also creates open wounds that provide entry to a wide variety of plant-pathogenic fungi and bacteria. These microbial infections are often more economically damaging than the direct effects of nematode feeding.

An effective formulation for delivery of a crystalline active ingredient for the control of nematodes has several requirements that can be difficult to combine effectively in an efficacious formulation. First the crystalline active ingredient needs to be ground to a very fine particle size to facilitate easy penetration deep into the soil to the root zone. Second the formulation needs to have good wetting to also facilitate easy penetration deep into the soil to the root zone. The good wetting can be achieved by the addition of surfactants that facilitate the wetting and penetration of the diluted formulation into the soil. However, the inclusion of surfactants that facilitate the wetting and penetration of the formulation into the soil during application creates difficulties both for the fine grinding of the active ingredient particles and also for the the particle size stability on storage. In the case of grinding particles to a fine particle size the addition of surfactants that facilitate the wetting and penetration into the soil can significantly increase the viscosity of the formulation which can markedly reduce the grinding performance with the consequence that the grinding process becomes markedly less efficient and may also no longer be able to achieve a fine particle size. In the case of the particle size the inclusion of surfactants that facilitate the wetting and penetration into the soil can cause the particle size to increase during storage in the product pack over time through the process known as Ostwald ripening. This can result in the biological performance of the product decreasing and a reduction in the shelf life of the product. To avoid this unwanted increase in the particle size during the storage of the product during its shelf life, which can be two or more years, it is important that the surfactants have only the minimum increase in particle size in the formulation during storage.

There is an urgent need in the industry for effective, economical, and environmentally safe methods of controlling nematodes. Moreover improved properties of the plant, for example better growth, increased harvest yields, a better developed root system, a larger leaf area, greener leaves, stronger shoots, less seed required, lower phytotoxicity, mobilization of the defence system of the plant or good compatibility with plants are desired.

Fluopyram is defined to be the compound of the formula (I) 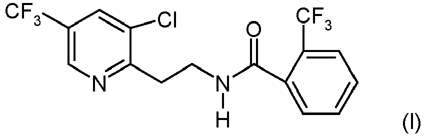 as well as the N-oxides of the compound thereof.

Fluopyram is a broad spectrum fungicide with penetrant and translaminar properties for foliar, drip, drench and seed treatment applications on a wide range of different crops against many economically important plant diseases. Fluopyram and its manufacturing process starting from known and commercially available compounds is described in EP-A-1 389 614 and WO-A 2004/016088.

A general description of the nematicidal activity of pyridylethylbenzamide derivatives is found in WO-A 2008/126922.

WO-A1-2012072660 describes the use of pyridylethylbenzamide derivatives for controlling nematodes and methods for controlling nematodes and/or increasing crop yield.

Current formulations of fluopyram have been designed for foliar use to control fungal diseases. These however are not especially designed for the control of nematodes and furthermore are not especially efficacious in the control of nematodes. Thus the object of the present invention was to design new formulations of fluopyram with improved efficacy for the control of nematodes and to improve yield. It is also important that the formulations have excellent physical stability and low crystal growth, particularly in tropical climates where instabilities such as crystal growth during storage can result in loss of both physical stability and biological efficacy.

This object was solved by suspension concentrate formulations based on fluopyram with a special small particle size (Dv90 <5.0 µm) along with certain polyalkylene oxide block copolymers.

Formulations according to the invention exhibit both an enhancement of biological performance compared to existing standards and stability physical stability, especially with regard to crystal growth.

Subject of the present invention are suspension concentrate formulations containing a combination of a compound of formula (I) 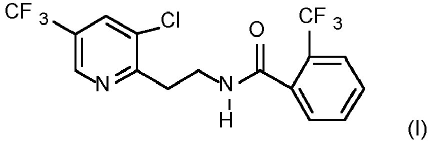 wherein compound (I) has a particle size Dv90 less than 5.0µm, preferably less than 4.5µm, more preferably less than 4.0µm and especially preferably less than 3.5µm and
b) at least one polyalkylene oxide block copolymer of formula (II) 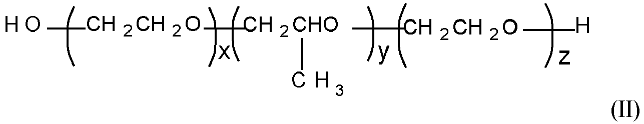 wherein in compound of formula (II)
x, z is 2 to 140, more preferred 48 to 130 and especially preferred 90 to 110 and
y is 15 to 80, more preferred 24 to 70 and especially preferred 48 to 68.

Compound (I) has a preferred particles size between 1.0 µm and 5.0 µm, more preferred between 1.5 µm and 4.5 µm, even more preferred between 2.0 µm and 4.0 µm and especially preferred between 2.0 µm and 3.5 µm .

In a preferred embodiment of the suspension concentrate formulations according to the invention compound of formula (II) has a molecular weight of 7,000 to 18,000 g/mol, preferably 9,000 to 16,000 g/mol, more preferably 10,000 to 14,600 g/mol and especially preferred 12,000 to 14,000 g/mol.

In another preferred embodiment of the suspension concentrate formulations according to the invention compound of formula (II) has an ethylene oxide content of 50 to 85%, preferred 60 to 80% and more preferred 65 to 75% and especially preferred 70%.

In a more preferred embodiment of the formulation according to the invention the polyalkylene oxide block copolymer (b) has a molecular weight of 7,000 to 18,000 g/mol and an ethylene oxide content of 50 to 85%, preferably a molecular weight of 9,000 to 16,000 g/mol and an ethylene oxide content of 60 to 80%, more preferably a molecular weight of 10,000 to 14,000 g/mol and an ethylene oxide content of 65 to 75% and especially preferred a molecular weight of 12,000 to 14,000 g/mol and an ethylene oxide content of 70%.

In a preferred embodiment of the present invention the formulation contains at least 30 g/l, preferably at least 35 g/l,more preferably at least 40 g/l and especially preferred at least 50 g/l of a polyalkylene oxide block copolymer of formula (II) (compound b).

In another aspect of the present invention the suspension concentrate formulations according to the invention further comprise
c) one or more non-ionic surfactants or dispersing aids and/or at least one anionic surfactants or dispersing aids,
d) one or more rheological modifier and
e) one or more other formulants selected from the group comprising antifoam, biocide, antifreeze, colourant, pH-adjusters, buffers, stabilisers, crystal growth inhibitors or micronutirients.

In one embodiment of the present invention the suspension concentrates according to the invention comprise 1 to 800 g/l, preferably 50 to 700 g/l, more preferably 100 to 600 g/l and especially preferred 250 to 500 g/l of component a).

In a further embodiment of the present invention the suspension concentrates according to the invention comprise 30 to 500 g/l,preferably 35 to 200 g/l,more preferably 40 to 100 g/l and especially preferred 50 to 80 g/l of component b).

In a further embodiment of the present invention the suspension concentrates according to the invention comprise 1 to 800 g/l, preferably 5 to 500 g/l,more preferably 10 to 200 g/l and especially preferred 20 to 100 g/l of component c).

In a further embodiment of the present invention the suspension concentrates according to the invention comprise 0.1 to 100 g/l,preferably 0.5 to 50 g/l,more preferably 1 to 25 g/l and especially preferred 1.5 to 10 g/l of component d).

In a further embodiment of the present invention the suspension concentrates according to the invention comprise 0.1 to 800 g/l,preferably 0.5 to 500 g/l,more preferably 1 to 300 g/l and especially preferred 1 to 200 g/l of component e).

Suitable PEO-PPO-PEO block copolymers b) are, for example Synperonic^{®} PE/F127, Synperonic^{®} PE/F108, Synperonic^{®} PE/F87, Synperonic^{®} PE/F68 (Croda), Pluronic^{®} F127, Pluronic^{®} F108, Pluronic^{®} F68, Pluronic^{®} F88, Pluronic^{®} F87, Pluronic^{®} F98, Pluronic^{®} F77 (BASF). More preferred are Synperonic^{®} PE/F127, Synperonic^{®} PE/F108, Pluronic^{®} F127 and Pluronic^{®} F108, especially preferred are Synperonic^{®} PE/F127 and Pluronic^{®} F127. Preferred compounds b) are given in Table 1:

**Table 1: Exemplified trade names and CAS-No's of preferred compounds b)**

| **Tradename** | **Company** | **General description** | **Molecular weight g/mol (typical)** | **EO%** | **CAS- No.** |
|---|---|---|---|---|---|
| Synperonic^{®} PE/F 127 | Croda | block-copolymer of polyethylene oxide and polypropylene oxide | 12000 | 70 | 9003-11-6 |
| Synperonic^{®} PE/F108 | Croda | block-copolymer of polyethylene oxide and polypropylene oxide | 14000 | 80 | 9003-11-6 |
| Synperonic^{®} PE/F68 | Croda | block-copolymer of polyethylene oxide and polypropylene oxide | 8350 | 80 | 9003-11-6 |
| Synperonic^{®} PE/F87 | Croda | block-copolymer of polyethylene oxide and polypropylene oxide | 7700 | 70 | 9003-11-6 |
| Pluronic^{®} F127 | BASF | block-copolymer of polyethylene oxide and polypropylene oxide | 12600 | 70 | 9003-11-6 |
| Pluronic^{®} F108 | BASF | block-copolymer of polyethylene oxide and polypropylene oxide | 14600 | 80 | 9003-11-6 |
| Pluronic^{®} F98 | BASF | block-copolymer of polyethylene oxide and polypropylene oxide | 13000 | 80 | 9003-11-6 |
| Pluronic^{®} F88 | BASF | block-copolymer of polyethylene oxide and polypropylene oxide | 11400 | 80 | 9003-11-6 |
| Pluronic^{®} F68 | BASF | block-copolymer of polyethylene oxide and polypropylene oxide | 8400 | 80 | 9003-11-6 |
| Pluronic^{®} F87 | BASF | block-copolymer of polyethylene oxide and polypropylene oxide | 7700 | 70 | 9003-11-6 |
| Pluronic^{®} F77 | BASF | block-copolymer of polyethylene oxide and polypropylene oxide | 6600 | 70 | 9003-11-6 |

Suitable surfactants or dispersing aids c) are all substances of this type which can customarily be employed in agrochemical agents such as non-ionic or anionic surfactants. Preferred non-ionic surfactants are polyethylene glycol ethers of branched or linear alcohols, reaction products of fatty acids or fatty acid alcohols with ethylene oxide and/or propylene oxide, furthermore polyvinyl alcohol, polyoxyalkylenamine derivatives, polyvinylpyrrolidone, copolymers of polyvinyl alcohol and polyvinylpyrrolidone, and copolymers of (meth)acrylic acid and (meth)acrylic acid esters, acetylene diol ethoxylates, furthermore branched or linear alkyl ethoxylates and alkylaryl ethoxylates, where polyethylene oxide-sorbitan fatty acid esters may be mentioned by way of example. Out of the examples mentioned above selected classes can be optionally phosphate, sulphonated or sulphated and neutralized with bases.

Possible anionic surfactants c) are all substances of this type which can customarily be employed in agrochemical agents. Alkali metal, alkaline earth metal and ammonium salts of alkylsulphonic or alkylphospohric acids as well as alkylarylsulphonic or alkylarylphosphoric acids are preferred. A further preferred group of anionic surfactants or dispersing aids are alkali metal, alkaline earth metal and ammonium salts of polystyrenesulphonic acids, salts of polyvinylsulphonic acids, salts of alkylnaphthalene sulphonic acids, salts of naphthalenesulphonic acid-formaldehyde condensation products, salts of condensation products of naphthalenesulphonic acid, phenolsulphonic acid and formaldehyde and salts of lignosulphonic acid.

Preferred non-ionic surfactants c) are for example:
- tristyrylphenol ethoxylates comprising an average of 5-60 EO units;
- castor oil ethoxylates comprising an average of 5-40 EO units (e.g. Berol^{®} range, Emulsogen^{®} EL range);
- fatty alcohol ethoxylates comprising branched or linear alcohols with 8-18 carbon atoms and an average of 2-30 EO units;
- block-copolymer of polyethylene oxide and polyhydroxystearic acid;
- ethoxylated polymethacrylate graft copolymers;
- polyvinylpyrollidone based polymers;
- polyvinylacetate based polymers;
- ethoxylated diacetylene-diols (e.g. Surfynol^{®} 4xx-range);
- alkyl ether citrate surfactants (e.g. Adsee^{®} CE range, Akzo Nobel);
- alkyl polysaccharides/polyglycosides (e.g. Agnique^{®} PG8107, PG8105, Atplus^{®} 438, AL-2559, AL-2575);
- ethoxylated mono- or diesters of glycerine comprising fatty acids with 8 - 18 carbon atoms and an average of 10 - 40 EO units (e.g. Crovol^{®} range);
- block-copolymer of polyethylene oxide and polybutylene oxide.
- org organomodified polysiloxanes, e.g. BreakThru^{®} OE444, BreakThru^{®} S240, Silwett^{®} L77, Silwett^{®} 408, Silwet^{®} 806.

Preferred anionic surfactants c) and polymers are for example:
- naphthalene sulphonate formaldehyde condensate, sodium salt;
- sodium diisopropylnaphthalenesulphonate;
- dioctylsulfosuccinate sodium salt;
- tristyrylphenol ethoxylate sulfate and ammonium and potassium salts thereof;
- tristyrylphenol ethoxylate phosphate and ammonium and potassium salts thereof;
- ligninsulfonic acid, sodium salt;
- styrene acrylic polymers;
- polycarboxylic acids, sodium and potassium salts.

More preferred components c) are ethoxylated polymethacrylate graft copolymers, polycarboxylic acids, sodium and potassium salts, tristyrylphenol ethoxylate sulfate and ammonium and potassium salts thereof, naphthalene sulphonate formaldehyde condensate, sodium salt and ethoxylated diacetylene-diols. In Table 2 preferred components c) are shown:

**Table 2: Exemplified trade names and CAS-No's of preferred compounds c)**

| **Tradename** | Company | General description | CAS- No. |
|---|---|---|---|
| Soprophor^{®} 4D384 | Solvay | tristyrylphenol ethoxylate (16EO) sulfate ammonium salt | 119432-41-6 |
| Synergen^{®} W10 | Clariant | dioctylsulfosuccinate sodium salt (65-70%) | 577-11-7 |
| Geropon^{®} T36 | Solvay | Sodium polycarboxylate | 37199-81-8 |
| Surfynol^{®} 440 | Air Products | 2.4.7.9-Tetramethyldec-5-yne-4.7-diol, ethoxylated | 9014-85-1 |
| Morwet^{®} D425 | Akzo Nobel | Naphthalene sulphonate formaldehyde condensate Na salt | 9008-63-3 |
| .Atlox^{®} 4913 | Croda | methyl methacrylate graft copolymer with polyethylene glycol | 119724-54-8 |
| Kuraray Poval^{®} 3-85 | Kuraray | Polyvinyl alcohol | 25213-24-5 |
| Berol^{®} 827 | Akzo Nobel | castor oil ethoxylate (25EO) | 26264-06-2 |
| Berol^{®} 829 | Akzo Nobel | castor oil ethoxylate (20EO) | 26264-06-2 |
| Emulsogen^{®} EL-400 | Clariant | castor oil ethoxylate (40EO) | 61791-12-6 |
| Silwet^{®} 408 | Momentive | Polyalkyleneoxide modified heptamethyltrisiloxane | 67674-67-3 |
| Silwet^{®} 806 | Momentive | Polyalkyleneoxide modified heptamethyltrisiloxane | 67674-67-3 |
| Silwett^{®} L77 | Momentive | Polyalkyleneoxide modified heptamethyltrisiloxane | 67674-67-3 |
| BreakThru^{®} OE 444 | Evonik Industries | Siloxanes and Silicones, cetyl Me, di-Me | 191044-49-2 |
| BreakThru^{®} S240 | Evonik Industries | polyether modified trisiloxane | 134180-76-0 |
| Genapol^{®} X080 | Clariant | alcohol ethoxylate (iso-C13-EO8) | 9043-30-5 |
| Agnique^{®} PG8107 | BASF | Oligomeric D-glucopyranose decyl octyl glycosides | 68515-73-1 |

Suitable rheological modifiers d) by way of example are:
- Polysaccharides including xanthan gum, guar gum and hydroxyethyl cellulose. Examples are Kelzan^{®}, Rhodopol^{®} G and 23, Satiaxane^{®} CX911 and Natrosol^{®} 250 range.
- Clays including montmorillonite, bentonite, sepeolite, attapulgite, laponite, hectorite. Examples are Veegum^{®} R, Van Gel^{®} B, Bentone^{®} CT, HC, EW, Pangel^{®} M range, S9, AD, HV, W, Attagel^{®} 50, Laponite^{®} RD,
- Fumed and precipitated silica, examples are Aerosil^{®} 200, R972, R974 and Siponat^{®} 22.

More preferred are xanthan gum, montmorillonite clay and bentonite clay.

Preferred components d) are given in Table 3:

**Table 3: Exemplified trade names and CAS-No's of preferred compounds (d)**

| **Tradename** or name | Company | General description | CAS- No. |
|---|---|---|---|
| Xanthan | | Polysaccharide | 11138-66-2 |
| Aerosil^{®} 200 | Evonik | Hydrophilic fumed silica | 112945-52-5 7631-86-9 |
| Aerosil^{®} R972 | Evonik | Hydrophobic fumed silica | 112945-52-5 7631-86-9 |
| Aerosil^{®} R974 | Evonik | Hydrophobic fumed silica | 112945-52-5 7631-86-9 |
| Attagel^{®} 50 | BASF | Attapulgite clay, Palygorskite | 12174-11-7 |
| | | ([Mg(Al 0.5-1 Fe 0-0.5 )]Si 4 | |
| | | (OH)O 10 × 4 H 2 O | |
| Laponite^{®} RDS / RD | Laporte | Laponite, Silicic acid, lithium magnesium sodium salt | 53320-86-8 |
| Veegum^{®} R | Vanberbilt | Montmorillonite, smectite clay | 12199-37-0 |
| Van Gel^{®} B | Vanberbilt | Montmorillonite, smectite clay | 12199-37-0 |
| Bentone^{®} CT | Elementis | Hectorite | 12173-47-6 |
| | | ((Mg2.67Li0.33)Si4Na0.33[F0.5-1(OH)0-0.5]2O10) | |
| Bentone^{®} HC | Elementis | Hectorite (refined) | 12173-47-6 |
| | | ((Mg2.67Li0.33)Si4Na0.33[F0.5-1(OH)0-0.5]2010) | |
| Bentone^{®} EW | Elementis | Hectorite (refined) | 12173-47-6 |
| | | ((Mg2.67Li0.33)Si4Na0.33[F0.5-1(OH)0-0.5]2O10) | |
| Pangel^{®} S9 | Tolsa | Sepeolite clay | 12639-43-9 |
| | | (dimagnesium;dihydroxy(oxo)silane; hydrate) | |
| Pangel^{®} AD | Tolsa | Sepeolite clay | 12639-43-9 |
| | | (dimagnesium;dihydroxy(oxo)silane; hydrate) | |
| Pangel^{®} HV | Tolsa | Sepeolite clay | 12639-43-9 |
| | | (dimagnesium;dihydroxy(oxo)silane; hydrate) | |
| Pangel^{®} M range | Tolsa | Bentonite clay | 1302-78-9 |
| Pangel^{®} W | Tolsa | Organically modified Sepiolite clay | 12639-43-9 |
| Sipernat^{®} 22 | Evonik | Hydrophilic precipitated silica | 112945-52-5 7631-86-9 |

Preferred other formulants e) comprising antifoam, biocide, antifreeze, colourant, pH adjusters, buffers, stabilisers, antioxidants, inert filling materials, humectants, crystal growth inhibitors or micronutirients by way of example are:
Suitable antifoam substances e) are all substances which can customarily be employed in agrochemical agents for this purpose. Silicone oils, silicone oil preparations are preferred. Examples are Silcolapse^{®} 426 and 432 from Bluestar Silicones, Silfoam^{®} SRE and SC132 from Wacker, SAG 1572 and SAG 30 from Momentive [Dimethyl siloxanes and silicones, CAS No. 63148-62-9].

Possible preservatives e) are all substances which can customarily be employed in agrochemical agents for this purpose. Suitable examples for preservatives are preparations containing 5-chloro-2-methyl-4-isothiazolin-3-one [CAS-No. 26172-55-4], 2-methyl-4-isothiazolin-3-one [CAS-No. 2682-20-4] or 1.2-benzisothiazol-3(2H)-one [CAS-No. 2634-33-5]. Examples which may be mentioned are Preventol^{®} D7 (Lanxess), Kathon^{®} CG/ICP (Dow), Acticide^{®} SPX (Thor GmbH) and Proxel^{®} GXL (Arch Chemicals).

Suitable antifreeze substances e) are all substances which can customarily be employed in agrochemical agents for this purpose. Suitable examples are propylene glycol, ethylene glycol, urea and glycerine.

Possible colourants e) are all substances which can customarily be employed in agrochemical agents for this purpose. Titanium dioxide, carbon black, zinc oxide, blue pigments, Brilliant Blue FCF, red pigments and Permanent Red FGR may be mentioned by way of example.

Possible pH adjusters and buffers e) are all substances which can customarily be employed in agrochemical agents for this purpose. Citric acid, sulfuric acid, hydrochloric acid, sodium hydroxide, sodium hydrogen phosphate (Na₂HPO₄), sodium dihydrogen phosphate (NaH₂PO₄), potassium dihydrogen phosphate (KH₂PO₄), potassium hydrogen phosphate (K₂HPO₄), may be mentioned by way of example.

Suitable stabilisers and antioxidants e) are all substances which can customarily be employed in agrochemical agents for this purpose. Butylhydroxytoluene [3.5-Di-tert-butyl-4-hydroxytoluol, CAS-No. 128-37-0] is preferred.

Preferred components e) are listed in Table 4:

**Table 4: Exemplified trade names and CAS-No's of preferred compounds e)**

| **Tradename** | Company | General description | CAS- No. |
|---|---|---|---|
| Proxel^{®} GXL | Arch Chemicals | 1.2-benzisothiazol- 3 (2H)-one | 2634-33-5 |
| Kathon^{®} CG/ICP | Dow | 5-chloro-2-methyl-4-isothiazolin-3-one plus 2-methyl-4-isothiazolin-3 -one | 26172-55-4 plus 2682-20-4 |
| SAG^{®} 1572 | Momentive | Dimethyl siloxanes and silicones | 63148-62-9 |
| Glycerine | | propane-1,2,3-triol | 56-81-5 |
| Butylhydroxytoluene | | 3.5-Di-tert-butyl-4-hydroxytoluol | 128-37-0 |
| Silcolapse^{®} 411 | Blue Star Silicones | Dimethyl siloxanes and silicones | 63148-62-9 |
| Acticide^{®} SPX | Thor | 5-chloro-2-methyl-4-isothiazolin-3-one plus 2-methyl-4-isothiazolin-3-one | 26172-55-4, 2682-20-4, 55965 -84-9 |
| Propylene glycol | | 1,2-Propylene glycol | 57-55-6 |
| Brilliant Blue FCF | | ethyl - [4 - [[4 - [ethyl -[(3 - sulfophenyl) methyl] amino] phenyl] - (2 - sulfophenyl) methylidene] - 1 - cyclohexa - 2, 5 - dienylidene] - [(3 - sulfophenyl) methyl] azanium | 3844-45-9 |

It is preferred that the suspension concentrate according to the invention comprises
a) 1 to 800 g/l of fluopyram,
b) 30 to 500 g/l of a block copolymer of formula (II),
c) 1 to 250 g/l of one or more non-ionic surfactant or dispersing aid and/or at least one anionic surfactant or dispersing aid,
d) 0.1 to 100 g/l of rheological modifier,
e) 0.01 to 250 g/l other formulants selected from the group comprising antifoam, biocide, antifreeze, colourant, pH-adjusters, buffers, stabilisers, crystal growth inhibitors, micronutirients.

More preferred the suspension concentrate according to the invention comprises
a) 50 to 700 g/l of fluopyram,
b) 35 to 200 g/l of a block copolymer of formula (II),
c) 5 to 200 g/l of one or more non-ionic surfactant or dispersing aid and/or at least one anionic surfactant or dispersing aid,
d) 0.5 to 50 g/l of rheological modifier,
e) 0.01 to 300 g/l other formulants selected from the group comprising antifoam, biocide, antifreeze, colourant, pH-adjusters, buffers, stabilisers, crystal growth inhibitors, micronutirients.

Even more preferred the suspension concentrate according to the invention comprises
a) 50 to 700 g/l of fluopyram,
b) 40 to 100 g/l of a block copolymer of formula (II),
c) 5 to 200 g/l of one or more non-ionic surfactant or dispersing aid and/or at least one anionic surfactant or dispersing aid,
d) 0.5 to 50 g/l of rheological modifier,
e) 0.01 to 300 g/l other formulants selected from the group comprising antifoam, biocide, antifreeze, colourant, pH-adjusters, buffers, stabilisers, crystal growth inhibitors, micronutirients.

Particularly preferred the suspension concentrate according to the invention comprises
a) 250 to 500 g/l of fluopyram,
b) 50 to 80 g/l of a block copolymer of formula (II),
c) 10 to 150 g/l of one or more non-ionic surfactant or dispersing aid and/or at least one anionic surfactant or dispersing aid,
d) 1 to 40 g/l of rheological modifier,
e) 0.01 to 250 g/l other formulants selected from the group comprising antifoam, biocide, antifreeze, colourant, pH-adjusters, buffers, stabilisers, crystal growth inhibitors, micronutirients.

Optionally the suspension concentrate according to the invention also comprises the following additional components:
f) 1 to 800 g/l,preferably 10 to 400 g/l of one or more additional agrochemical active compounds.

Suitable additional agrochemical compounds f) by way of example are:

### Nematicides:

- Acetylcholinesterase (AChE) inhibitors, for example carbamates, e.g. Alanycarb, Aldicarb, Aldoxycarb, Benomyl, Benfuracarb, Carbofuran, Carbosulfan, Cleothocarb, Oxamyl, Thiodicarb, Cadusafos, Ethoprophos, Fenamiphos, Fosthiazate, Imicyafos, Pyraclofos, Terbufos, Tripate.
- LSP:
- other Organophosphorus Pesticides (OPs): Diamiafos, Thionazin, Fenamiphos, Fensulfothion, Fosthietan, Isazofos, Ebufos, Phosphamidon.
- Chloride channel activators, for example avermectins/milbemycins, e.g. Abamectin, Emamectin benzoate, Lepimectin and Milbemectin.
- Miscellaneous non-specific (multi-site) inhibitors, for example alkyl halides, e.g. Methyl bromide and other alkyl halides; or Chloropicrin or Sulfuryl fluoride or Borax or Tartar emetic.
- Microbial disruptors of insect midgut membranes, e.g. *Bacillus thuringiensis* subspecies *israelensis, Bacillus sphaericus, Bacillus thuringiensis* subspecies aizawai, *Bacillus thuringiensis* subspecies kurstaki, *Bacillus thuringiensis* subspecies tenebrionis and BT crop proteins: Cry1Ab, Cry1Ac, Cry1Fa, Cry2Ab, mCry3A, Cry3Ab, Cry3Bb, Cry34/35Ab1.
- Inhibitors of acetyl CoA carboxylase, for example tetronic and tetramic acid derivatives, e.g. Spirobudiclofen, Spirodiclofen, Spiromesifen and Spirotetramat. Benclothiaz, Fluazaindolizine, Fluensulfone, Fluopyram, Iprodione, Tioxazafen;
- furthermore products based on *Bacillus firmus* (including but not limited to strain CNCM 1-1582, such as, for example, VOTiVO TM, BioNem), Gougerotin, *Purpureocillium lilacinum (BioAct), Metarhizium anisopliae F52, Isaria fumosorosea strain Apopka and other strains, Beauveria bassiana strains* or one of the following known active compounds: Tioxazafen.

Especially preferred are clothiandin, flupyradifurone, *Bacillus firmus, Bacillus subtilis,* imidacloprid.

To achieve the particle size of component a) according to the invention the suspension concentrate according to the invention is prepared by special split addition of the block copolymer b), a proportion between 0 and 80%, preferably 0 and 60%, more preferably between 0 and 40% and especially preferred between 20 and 40% is added to the slurry prior to milling and the remainder, between 100 and 20%, preferably between 100 and 40%, more preferably between 100 and 60% and especially preferred between 80 and 60% is added after milling. Furthermore, in order to achieve the small particle size according to the invention with a practically fast rate of milling throughput it is necessary to use grinding media with a bead size of 0.75 to 0.5 mm, preferably 0.6 to 0.4 mm, more preferred 0.5 to 0.3 mm diameter and specially preferred 0.4 to 0.2 mm.

The present invention is also directed to a process for the preparation of the formulation according to the invention, wherein in a first step a thickener gel is prepared by mixing a portion of about 100 to 250 g/l, preferably about 150 to 250 g/l of water, the rheological modifier (d), biocides (e), all except 5 to 40 g/l, preferably 10 to 30 g/l, more preferably 20 g/l of the copolymer (b) and a portion of about 0.5 to 3 g/l of the antifoam. In a second step a pre-mill slurry is prepared by mixing the components d), e) and 0 to 40 g/l, preferably 10 to 30 g/l of component b) in the remaining water, in a third step the component a) is added to the pre-mill slurry and mixed with a rotor-stator mixer until the particle size of component a) is less than 50 µm and in a fourth step the pre-mill slurry is ground in a bead mill containing grinding media g) with a bead size of 0.3 to 0.75 mm, preferably 0.3 to 0.6 mm, more preferably 0.4 to 0.6 mm and in a fifth step the thickener gel prepared in the first step is added during mixing.

In a preferred embodiment of the process according to the invention in the first step the ingredients are mixed with a stirrer rotating at <1000 rpm to form a thickener gel for adding post-milling. In the second step the pre-mill slurry is prepared by mixing all the remaining components until fully dissolved or dispersed.

In the fourth step it is preferred that the pre-mill slurries are ground in a bead mill with suitable cooling until the required particle size is obtained. The temperature in the mill during grinding is controlled between 10 and 40°C.

The thickener gel prepared in the first step above is then added with low shear mixing until homogeneous. Finally any adjustments such as pH, the preferred range is pH 5 to pH 8, are made prior to filling into packs.

Suitable bead mills include by example Eiger^{®} 250 mini motor mill and Dynomill^{®} ECM mills. Suitable rotor-stator mixers include by example Silverson^{®} LR4, ULTRA-TURRAX^{®} T 50 and FrymaKoruma^{®} MZ50.

Suitable grinding media g) are selected from the group of glass, Zr doped glass, ceramic, Zr silicate, ZrO₂ (Y₂O₃ stabilised), ZrO₂ (CeO₂ stabilised), polymers, cross-linked polystyrene or steel. Preferred are glass and ZrO₂ (Y₂O₃ stabilised).

It will be appreciated to those skilled in the art that small adjustments may be made to the portions of wetter (b) and other components added before and after milling that remain within the scope of the invention.

Further subject of the present invention is a method for controlling neamtodes in crop protection.

"Controlling nematodes" according to the invention shall mean to kill nematodes or to prevent their development or growth. The efficacy of the compositions or combinations according to the invention is assessed by comparing the mortality of nematodes, the development of galls, the formation of cysts, the concentration of nematodes per volume of soil, of cysts, the concentration of nematodes per root, the number of nematode eggs per volume of soil, the motility of the nematodes between a plant, a plant part or the soil treated with a composition or combination according to the invention and the untreated plant, plant part or soil (100 %). Preferred is a reduction by 25 - 50 % in comparison with the untreated plant, plant part or soil, very preferred a reduction by 40 - 79 %, and particularly preferred the complete killing and the complete prevention of the development or growth by a reduction from 70 % to 100 % in comparison with the untreated plant, plant part or soil.

"Controlling nematodes" according to the invention shall mean the control of the reproduction of the nematodes (e.g. development of cysts or eggs). The compositions according to the invention can used for keeping the plants healthy and can be used curatively, preventively or systemically for controlling nematodes.

The skilled person knows methods for determining the mortality of nematodes, the development of galls, the formation of cysts, the concentration of nematodes per volume of soil, of cysts, the concentration of nematodes per root, the number of nematode eggs per volume of soil, the motility of the nematodes between a plant, a plant part or the soil. The treatment according to the invention reduces the damages caused by nematodes to the plant and leads to an increase in yield.

"Nematodes" as used herein encompass all species of the phylum Nematoda and in particular species that are parasitic or cause health problems to plant or to fungi (for example species of the orders *Aphelenchida,* Meloidogyne, *Tylenchida* and others) or to humans and animals (for example species of the orders Trichinellida, Tylenchida, Rhabditina, and Spirurida) as well as other parasitic helminths.

"Nematodes" as used herein, refer to plant nematodes meaning all nematodes that cause damage to plants. Plant nematodes encompass plant parasitic nematodes and nematodes living in the soil. Plant parasitic nematodes include, but are not limited to, ectoparasites such as *Xiphinema spp*., *Longidorus spp*., and *Trichodorus spp*.; semiparasites such as *Tylenchulus spp*.; migratory endoparasites such as *Pratylenchus spp*., *Radopholus spp*., and *Scutellonerna spp*.; sedentary parasites such as *Heterodera spp*., *Globodera spp*., and *Meloidogyne spp*., and stem and leaf endoparasites such as *Ditylenchus spp*., *Aphelenchoides spp*., and *Hirshmaniella spp*.. Especially harmful root parasitic soil nematodes are such as cystforming nematodes of the genera *Heterodera* or *Globodera*, and/or root knot nematodes of the genus *Meloidogyne.* Harmful species of these genera are for example *Meloidogyne incognita*, *Heterodera glycines* (soybean cyst nematode), *Globodera pallida* and *Globodera rostochiensis* (potato cyst nematode), which species are effectively controlled with the compounds described herein. However, the use of the formulations described herein is in no way restricted to these genera or species, but also extends in the same manner to other nematodes.

Plant nematodes include but are not limited to e.g. *Aglenchus agricola*, *Anguina tritici*, *Aphelenchoides arachidis*, *Aphelenchoides fragaria* and the stem and leaf endoparasites *Aphelenchoides spp*. in general, *Belonolaimus gracilis, Belonolaimus longicaudatus, Belonolaimus nortoni, Bursaphelenchus cocophilus, Bursaphelenchus eremus, Bursaphelenchus xylophilus and Bursaphelenchus spp*. *in general, Cacopaurus pestis, Criconemella curvata*, *Criconemella onoensis, Criconemella ornata*, *Criconemella rusium, Criconemella xenoplax (= Mesocriconema xenoplax)* and *Criconemella spp*. in general, *Criconemoides ferniae, Criconemoides onoense, Criconemoides ornatum* and *Criconemoides spp*. in general, *Ditylenchus destructor, Ditylenchus dipsaci, Ditylenchus myceliophagus* and the stem and leaf endoparasites *Ditylenchus spp*. in general, *Dolichodorus heterocephalus, Globodera pallida (=Heterodera pallida), Globodera rostochiensis* (potato cyst nematode), *Globodera solanacearum, Globodera tabacum, Globodera virginia* and the sedentary, cyst forming parasites *Globodera spp.* in general, *Helicotylenchus digonicus, Helicotylenchus dihystera, Helicotylenchus erythrine, Helicotylenchus multicinctus, Helicotylenchus nannus, Helicotylenchus pseudorobustus* and *Helicotylenchus spp*. in general, *Hemicriconemoides, Hemicycliophora arenaria, Hemicycliophora nudata, Hemicycliophora parvana, Heterodera avenae, Heterodera cruciferae, Heterodera glycines* (soybean cyst nematode), *Heterodera oryzae, Heterodera schachtii, Heterodera zeae* and the sedentary, cyst forming parasites *Heterodera spp.* in general, *Hirschmaniella gracilis, Hirschmaniella* oryzae *Hirschmaniella spinicaudata* and the stem and leaf endoparasites *Hirschmaniella spp.* in general, *Hoplolaimus aegyptii, Hoplolaimus californicus, Hoplolaimus columbus, Hoplolaimus galeatus, Hoplolaimus indicus, Hoplolaimus magnistylus, Hoplolaimus pararobustus, Longidorus africanus, Longidorus breviannulatus, Longidorus elongatus, Longidorus laevicapitatus, Longidorus vineacola* and the ectoparasites *Longidorus spp.* in general, *Meloidogyne acronea, Meloidogyne africana, Meloidogyne arenaria, Meloidogyne arenaria thamesi, Meloidogyne artiella, Meloidogyne chitwoodi, Meloidogyne coffeicola, Meloidogyne ethiopica, Meloidogyne exigua, Meloidogyne fallax, Meloidogyne graminicola, Meloidogyne graminis, Meloidogyne hapla, Meloidogyne incognita, Meloidogyne incognita acrita, Meloidogyne javanica, Meloidogyne kikuyensis, Meloidogyne minor, Meloidogyne naasi, Meloidogyne paranaensis, Meloidogyne thamesi* and the sedentary parasites *Meloidogyne spp.* in general, *Meloinema spp., Nacobbus aberrans, Neotylenchus vigissi, Paraphelenchus pseudoparietinus, Paratrichodorus allius, Paratrichodorus lobatus, Paratrichodorus minor, Paratrichodorus nanus, Paratrichodorus porosus, Paratrichodorus teres* and *Paratrichodorus spp*. in general, *Paratylenchus hamatus, Paratylenchus minutus, Paratylenchus projectus and Paratylenchus spp*. in general, *Pratylenchus agilis, Pratylenchus alleni, Pratylenchus andinus, Pratylenchus brachyurus, Pratylenchus cerealis, Pratylenchus coffeae, Pratylenchus crenatus, Pratylenchus delattrei, Pratylenchus giibbicaudatus, Pratylenchus goodeyi, Pratylenchus hamatus, Pratylenchus hexincisus, Pratylenchus loosi, Pratylenchus neglectus, Pratylenchus penetrans, Pratylenchus pratensis, Pratylenchus scribneri, Pratylenchus teres, Pratylenchus thornei, Pratylenchus vulnus, Pratylenchus zeae* and the migratory endoparasites *Pratylenchus spp.* in general, *Pseudohalenchus minutus, Psilenchus magnidens, Psilenchus tumidus, Punctodera chalcoensis, Quinisulcius acutus, Radopholus citrophilus, Radopholus similis,* the migratory endoparasites *Radopholus spp.* in general, *Rotylenchulus borealis, Rotylenchulus parvus, Rotylenchulus reniformis* and *Rotylenchulus spp.* in general, *Rotylenchus laurentinus, Rotylenchus macrodoratus, Rotylenchus robustus, Rotylenchus uniformis* and *Rotylenchus spp.* in general, *Scutellonema brachyurum, Scutellonema bradys, Scutellonema clathricaudatum* and the migratory endoparasites *Scutellonema spp.* in general, *Subanguina radiciola, Tetylenchus nicotianae, Trichodorus cylindricus, Trichodorus minor, Trichodorus primitivus, Trichodorus proximus, Trichodorus similis, Trichodorus sparsus* and *the ectoparasites Trichodorus spp.* in general, *Tylenchorhynchus agri, Tylenchorhynchus brassicae, Tylenchorhynchus clarus, Tylenchorhynchus claytoni, Tylenchorhynchus digitatus, Tylenchorhynchus ebriensis, Tylenchorhynchus maximus, Tylenchorhynchus nudus, Tylenchorhynchus vulgaris and Tylenchorhynchus spp.* in general, *Tylenchulus semipenetrans and the semiparasites Tylenchulus spp. in general, Xiphinema americanum, Xiphinema brevicolle, Xiphinema dimorphicaudatum, Xiphinema index and the ectoparasites Xiphinema spp. in general.*

Also subject of the present invention is the use of the formulations according to the invention as nematicide.

Examples of nematodes to which a nematicide of the present invention is applicable include, but are not limited to, nematodes of the genus *Meloidogyne* such as the southern root-knot nematode (*Meloidogyne incognita*), Javanese root-knot nematode (*Meloidogyne javanica*), northern root-knot nematode (*Meloidogyne hapla*), and peanut root-knot nematode (*Meloidogyne arenaria*); nematodes of the genus *Ditylenchus* such as the potato rot nematode (*Ditylenchus destructor*) and bulb and stem nematode (*Ditylenchus dipsaci*); nematodes of the genus *Pratylenchus* such as the cob root-lesion nematode (*Pratylenchus penetrans*), chrysanthemum root-lesion nematode (*Pratylenchus fallax*), coffee root-lesion nematode (*Pratylenchus coffeae*), tea root-lesion nematode (*Pratylenchus loosi*), and walnut root-lesion nematode (*Pratylenchus vulnus*); nematodes of the genus *Globodera* such as the golden nematode (*Globodera rostochiensis*) and potato cyst nematode (*Globodera pallida*); nematodes of the genus *Heterodera* such as the soybean cyst nematode (*Heterodera glycines*) and sugar beet cyst nematode (*Heterodera schachtii*); nematodes of the genus *Aphelenchoides* such as the rice white-tip nematode (*Aphelenchoides besseyi*), chrysanthemum foliar nematode (*Aphelenchoides ritzemabosi*), and strawberry nematode (*Aphelenchoides fragariae*); nematodes of the genus *Aphelenchus* such as the mycophagous nematode (*Aphelenchus avenae*); nematodes of the genus *Radopholus* such as the burrowing nematode (*Radopholus similis*); nematodes of the genus *Tylenchulus* such as the citrus nematode (*Tylenchulus semipenetrans*); nematodes of the genus *Rotylenchulus* such as the reniform nematode (*Rotylenchulus reniformis*); nematodes that occur in trees, such as the pine wood nematode (*Bursaphelenchus xylophilus*), and the like.

Plants for which a nematicide of the present invention can be used are not particularly limited; for example, plants such as cereals (for example, rice, barley, wheat, rye, oat, corn, and the like), beans (soybeans, azuki beans, broad beans, peas, peanuts and the like), fruit trees/fruits (apples, citrus species, pears, grapes, peaches, Japanese apricots, cherries, walnuts, almonds, bananas, strawberries and the like), vegetables (cabbage, tomato, spinach, broccoli, lettuce, onion, Welsh onion, pepper and the like), root crops (carrot, potato, sweet potato, radish, lotus root, turnip and the like), industrial crops (cotton, hemp, paper mulberry, mitsumata, rape, beet, hop, sugarcane, sugar beet, olive, rubber, palms, coffee, tobacco, tea and the like), pepos (pumpkin, cucumber, watermelon, melon and the like), pasture plants (orchard grass, sorghum, thimosy, clover, alfalfa and the like), lawn grasses (mascarene grass, bent grass and the like), crops for flavorings etc. (lavender, rosemary, thyme, parsley, pepper, ginger and the like), and flower plants (chrysanthemum, rose, orchids and the like) can be mentioned.

Preferred vegetables are tomato cucurbits, potato, pepper, carrots, onions.

Tree crops - stone fruits are e.g. apricots, cherries, almonds and peaches.

Tree crops - pome fruits are e.g. apples, pears.

Tree crops -nuts are e.g. Beech, Brazil nut, Candlenut, Cashew, Chestnuts, including Chinese Chestnut, Sweet Chestnut, Colocynth, Cucurbita ficifolia, Filbert, Gevuina avellana, Hickory, including Pecan, Shagbark Hickory, Terminalia catappa, Hazelnut, Indian Beech, Kola nut, Macadamia, Malabar chestnut, Pistacia, Mamoncillo, Maya nut, Mongongo, Oak acorns, Ogbono nut, Paradise nut, Pili nut, Walnut, Black Walnut, Water Caltrop.

The formulations according to the present invention are particularly useful in controlling nematodes in coffee belonging to at least one species selected from the group of the phytoparasitic nematodes consisting of *Pratylenchus brachyurus, Pratylenchus coffeae, Meloidogyne exigua, Meloidogyne incognita, Meloidogyne coffeicola, Helicotylenchus spp*. and also consisting *of Meloidogyne paranaensis, Rotylenchus spp., Xiphinema spp., Tylenchorhynchus spp., Scutellonema spp.*

The formulations according to the present invention are particularly useful in controlling nematodes in potato belonging to at least one species selected from the group of the phytoparasitic nematodes consisting of *Pratylenchus brachyurus, Pratylenchus pratensis, Pratylenchus scribneri, Pratylenchus penetrans, Pratylenchus coffeae, Ditylenchus dipsaci* and also consisting of *Pratylenchus alleni, Pratylenchus andinus, Pratylenchus cerealis, Pratylenchus crenatus, Pratylenchus hexincisus, Pratylenchus loosi, Pratylenchus neglectus, Pratylenchus teres, Pratylenchus thornei, Pratylenchus vulnus, Belonolaimus longicaudatus, Trichodorus cylindricus, Trichodorus primitivus, Trichodorus proximus, Trichodorus similis, Trichodorus sparsus, Paratrichodorus minor, Paratrichodorus allius, Paratrichodorus nanus, Paratrichodorus teres, Meloidogyne arenaria, Meloidogyne fallax, Meloidogyne hapla, Meloidogyne thamesi, Meloidogyne incognita, Meloidogyne chitwoodi, Meloidogyne javanica, Nacobbus aberrans, Globodera rostochiensis, Globodera pallida, Ditylenchus destructor, Radopholus similis, Rotylenchulus reniformis, Neotylenchus vigissi, Paraphelenchus pseudoparietinus, Aphelenchoides fragariae, Meloinema spp.*

The formulations according to the present invention are particularly useful in controlling nematodes in tomato belonging to at least one species selected from the group of the phytoparasitic nematodes consisting of *Meloidogyne arenaria, Meloidogyne hapla, Meloidogyne javanica, Meloidogyne incognita, Pratylenchus penetrans* and also consisting of *Pratylenchus brachyurus, Pratylenchus coffeae, Pratylenchus scribneri, Pratylenchus vulnus, Paratrichodorus minor, Meloidogyne exigua, Nacobbus aberrans, Globodera solanacearum, Dolichodorus heterocephalus, Rotylenchulus reniformis.*

The formulations according to the present invention are particularly useful in controlling nematodes in cucurbits belonging to at least one species selected from the group of the phytoparasitic nematodes consisting of *Meloidogyne arenaria, Meloidogyne hapla, Meloidogyne javanica, Meloidogyne incognita, Rotylenchulus reniformis* and also consisting of *Pratylenchus thornei.*

The formulations according to the present invention are particularly useful in controlling nematodes in cotton belonging to at least one species selected from the group of the phytoparasitic nematodes consisting of *Belonolaimus longicaudatus, Meloidogyne incognita, Hoplolaimus columbus, Hoplolaimus galeatus, Rotylenchulus reniformis.*

The formulations according to the present invention are particularly useful in controlling nematodes in corn belonging to at least one species selected from the group of the phytoparasitic nematodes, especially consisting of *Belonolaimus longicaudatus, Paratrichodorus minor* and also consisting of *Pratylenchus brachyurus, Pratylenchus delattrei, Pratylenchus hexincisus, Pratylenchus penetrans, Pratylenchus zeae, (Belonolaimus gracilis), Belonolaimus nortoni, Longidorus breviannulatus, Meloidogyne arenaria, Meloidogyne arenaria thamesi, Meloidogyne graminis, Meloidogyne incognita, Meloidogyne incognita acrita, Meloidogyne javanica, Meloidogyne naasi, Heterodera avenae, Heterodera oryzae, Heterodera zeae, Punctodera chalcoensis, Ditylenchus dipsaci, Hoplolaimus aegyptii, Hoplolaimus magnistylus, Hoplolaimus galeatus, Hoplolaimus indicus, Helicotylenchus digonicus, Helicotylenchus dihystera, Helicotylenchus pseudorobustus, Xiphinema americanum, Dolichodorus heterocephalus, Criconemella ornata, Criconemella onoensis, Radopholus similis, Rotylenchulus borealis, Rotylenchulus parvus, Tylenchorhynchus agri, Tylenchorhynchus clarus, Tylenchorhynchus claytoni, Tylenchorhynchus maximus, Tylenchorhynchus nudus, Tylenchorhynchus vulgaris, Quinisulcius acutus, Paratylenchus minutus, Hemicycliophora parvana, Aglenchus agricola, Anguina tritici, Aphelenchoides arachidis, Scutellonema brachyurum, Subanguina radiciola.*

The formulations according to the present invention are particularly useful in controlling nematodes in soybean belonging to at least one species selected from the group of the phytoparasitic nematodes, especially consisting of *Pratylenchus brachyurus, Pratylenchus pratensis, Pratylenchus penetrans, Pratylenchus scribneri, Belonolaimus longicaudatus, Heterodera glycines, Hoplolaimus columbus* and also consisting of *Pratylenchus coffeae, Pratylenchus hexincisus, Pratylenchus neglectus, Pratylenchus crenatus, Pratylenchus alleni, Pratylenchus agilis, Pratylenchus zeae, Pratylenchus vulnus, (Belonolaimus gracilis), Meloidogyne arenaria, Meloidogyne incognita, Meloidogyne javanica, Meloidogyne hapla, Hoplolaimus columbus, Hoplolaimus galeatus, Rotylenchulus reniformis.*

The formulations according to the present invention are are particularly useful in controlling nematodes in tobacco belonging to at least one species selected from the group of the phytoparasitic nematodes, especially consisting of *Meloidogyne incognita, Meloidogyne javanica* and also consisting of *Pratylenchus brachyurus, Pratylenchus pratensis, Pratylenchus hexincisus, Pratylenchus penetrans, Pratylenchus neglectus, Pratylenchus crenatus, Pratylenchus thornei, Pratylenchus vulnus, Pratylenchus zeae, Longidorus elongatu, Paratrichodorus lobatus, Trichodorus spp., Meloidogyne arenaria, Meloidogyne hapla, Globodera tabacum, Globodera solanacearum, Globodera virginiae, Ditylenchus dipsaci, Rotylenchus spp., Helicotylenchus spp., Xiphinema americanum, Criconemella spp., Rotylenchulus reniformis, Tylenchorhynchus claytoni, Paratylenchus spp., Tetylenchus nicotianae.*

The formulations according to the present invention are particularly useful in controlling nematodes in citrus belonging to at least one species selected from the group of the phytoparasitic nematodes, especially consisting of *Pratylenchus coffeae* and also consisting of *Pratylenchus brachyurus, Pratylenchus vulnus, Belonolaimus longicaudatus, Paratrichodorus minor, Paratrichodorus porosus, Trichodorus* , *Meloidogyne incognita, Meloidogyne incognita acrita, Meloidogyne javanica, Rotylenchus macrodoratus, Xiphinema americanum, Xiphinema brevicolle, Xiphinema index, Criconemella spp., Hemicriconemoides, Radopholus similisrespectively Radopholus citrophilus, Hemicycliophora arenaria, Hemicycliophora nudata, Tylenchulus semipenetrans.*

The formulations according to the present invention are particularly useful in controlling nematodes in banana belonging to at least one species selected from the group of the phytoparasitic nematodes, especially consisting of *Pratylenchus coffeae, Radopholus similis* and also consisting of *Pratylenchus giibbicaudatus, Pratylenchus loosi, Meloidogyne spp., Helicotylenchus multicinctus, Helicotylenchus dihystera, Rotylenchulus spp.*

The formulations according to the present invention are particularly useful in controlling nematodes in pine apple belonging to at least one species selected from the group of the phytoparasitic nematodes, especially consisting of *Pratylenchus zeae, Pratylenchus pratensis, Pratylenchus brachyurus, Pratylenchus goodeyi., Meloidogyne spp., Rotylenchulus reniformis* and also consisting of *Longidorus elongatus, Longidorus laevicapitatus, Trichodorus primitivus, Trichodorus minor, Heterodera spp., Ditylenchus myceliophagus, Hoplolaimus californicus, Hoplolaimus pararobustus, Hoplolaimus indicus, Helicotylenchus dihystera, Helicotylenchus nannus, Helicotylenchus multicinctus, Helicotylenchus erythrine, Xiphinema dimorphicaudatum, Radopholus similis, Tylenchorhynchus digitatus, Tylenchorhynchus ebriensis, Paratylenchus minutus, Scutellonema clathricaudatum, Scutellonema bradys, Psilenchus tumidus, Psilenchus magnidens, Pseudohalenchus minutus, Criconemoides ferniae, Criconemoides onoense, Criconemoides ornatum.*

The formulations according to the present invention are particularly useful in controlling nematodes in grapes belonging to at least one species selected from the group of the phytoparasitic nematodes, especially consisting of *Pratylenchus vulnus, Meloidogyne arenaria, Meloidogyne incognita, Meloidogyne javanica, Xiphinema americanum, Xiphinema index* and also consisting of *Pratylenchus pratensis, Pratylenchus scribneri, Pratylenchus neglectus, Pratylenchus brachyurus, Pratylenchus thornei, Tylenchulus semipenetrans.*

The formulations according to the present invention are particularly useful in controlling nematodes in tree crops - pome fruits, belonging to at least one species selected from the group of the phytoparasitic nematodes, especially consisting of *Pratylenchus penetrans* and also consisting of *Pratylenchus vulnus, Longidorus elongatus, Meloidogyne incognita, Meloidogyne hapla.*

The formulations according to the present invention are particularly useful in controlling nematodes in tree crops - stone fruits, belonging to at least one species selected from the group of the phytoparasitic nematodes, especially consisting of *Pratylenchus penetrans, Pratylenchus vulnus, Meloidogyne arenaria, Meloidogyne hapla, Meloidogyne javanica, Meloidogyne incognita, Criconemella xenoplax* and also consisting of *Pratylenchus brachyurus, Pratylenchus coffeae, Pratylenchus scribneri, Pratylenchus zeae, Belonolaimus longicaudatus, Helicotylenchus dihystera, Xiphinema americanum, Criconemella curvata, Tylenchorhynchus claytoni, Paratylenchus hamatus, Paratylenchus projectus, Scutellonema brachyurum, Hoplolaimus galeatus.*

The formulations according to the present invention are particularly useful in controlling nematodes in tree crops - nuts, belonging to at least one species selected from the group of the phytoparasitic nematodes, especially consisting of *Trichodorus spp., Criconemella rusium* and also consisting of *Pratylenchus vulnus, Paratrichodorus spp., Meloidogyne incognita, Helicotylenchus spp., Tylenchorhynchus spp., Cacopaurus pestis.*

According to the invention all plants and plant parts can be treated. By plants is meant all plants and plant populations such as desirable and undesirable wild plants, cultivars and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods. By plant parts is meant all above ground and below ground parts and organs of plants such as shoot, leaf, blossom and root, whereby for example leaves, needles, stems, branches, blossoms, fruiting bodies, fruits and seed as well as roots, tubers, corms and rhizomes are listed. Crops and vegetative and generative propagating material, for example cuttings, corms, rhizomes, tubers, runners and seeds also belong to plant parts.

As already mentioned above, it is possible to treat all plants and their parts according to the invention. In one embodiment, wild plant species and plant cultivars, or those obtained by conventional biological breeding, such as crossing or protoplast fusion, and parts thereof, are treated. In a further embodiment, transgenic plants and plant cultivars obtained by genetic engineering, if appropriate in combination with conventional methods (Genetically Modified Organisms), and parts thereof are treated. The term "parts" or "parts of plants" or "plant parts" has been explained above.

### Transgenic plant, seed treatment and integration events

The transgenic plants or plant cultivars (those obtained by genetic engineering) which are to be treated with preference in accordance with the invention include all plants which, through the genetic modification, received genetic material which imparts particular advantageous useful properties ("traits") to these plants. Examples of such properties are better plant growth, increased tolerance to high or low temperatures, increased tolerance to drought or to levels of water or soil salinity, enhanced flowering performance, easier harvesting, accelerated ripening, higher yields, higher quality and/or a higher nutritional value of the harvested products, better storage life and/or processability of the harvested products. Further and particularly emphasized examples of such properties are increased resistance of the plants against animal and microbial pests, such as against insects, arachnids, nematodes, mites, slugs and snails owing, for example, to toxins formed in the plants, in particular those formed in the plants by the genetic material from Bacillus thuringiensis (for example by the genes CryIA(a), CryIA(b), CryIA(c), CryIIA, CryIIIA, CryIIIB2, Cry9c Cry2Ab, Cry3Bb and CryIF and also combinations thereof), furthermore increased resistance of the plants against phytopathogenic fungi, bacteria and/or viruses owing, for example, to systemic acquired resistance (SAR), systemin, phytoalexins, elicitors and also resistance genes and correspondingly expressed proteins and toxins, and also increased tolerance of the plants to certain herbicidally active compounds, for example imidazolinones, sulphonylureas, glyphosate or phosphinothricin (for example the "PAT" gene). The genes which impart the desired traits in question may also be present in combinations with one another in the transgenic plants. Examples of transgenic plants which may be mentioned are the important crop plants, such as cereals (wheat, rice, triticale, barley, rye, oats), maize, soya beans, potatoes, sugar beet, sugar cane, tomatoes, peas and other types of vegetable, cotton, tobacco, oilseed rape and also fruit plants (with the fruits apples, pears, citrus fruits and grapes), with particular emphasis being given to maize, soya beans, wheat, rice, potatoes, cotton, sugar cane, tobacco and oilseed rape. Traits which are particularly emphasized are the increased resistance of the plants to insects, arachnids, nematodes and slugs and snails.

### Crop protection - types of treatment

The treatment of the plants and plant parts with formulations according to the invention is carried out directly or by action on their surroundings, habitat or storage space using customary treatment methods, for example by dipping, spraying, atomizing, irrigating, evaporating, dusting, fogging, broadcasting, foaming, painting, spreading-on, injecting, watering (drenching) and drip irrigating. It is furthermore possible to apply the formulations according to the invention by the ultra-low volume method or to inject the formulations according to the invention itself into the soil.

A preferred direct treatment of the plants is to the soil, the plants are then treated by the action of the compounds of the formula (I) on the habitat of the plant. This may be done, for example, by spray, by drenching, by drip irrigation, or by mixing into the soil or the nutrient solution, i.e. the locus of the plant (e.g. soil or hydroponic systems) is impregnated with a liquid form of the compounds of the formula (I), or by soil application.

The compounds of the formula (I) according to the invention can also be adsorbed onto solid carrier materials to form granules that can be then introduced in solid form (e.g. in the form of granules) into the locus of the plants. The Suspension Concentrates according to the invention can also be adsorbed onto solid carrier materials to form granules that can be then introduced in solid form (e.g. in the form of granules) into the locus of the plants. Suitable carrier materials by way of example are sand, diatomaceous earth, corn cob husks, perlite, shredded newspaper, saw dusts, cedar fines, spruce fines, hardwood fines, limestone, zeolite, peat moss, peanut hulls, calcium carbonate, wood chips, attapulgite clay, bentonite, vermiculite and cotton lint.

Also subject of the present invention is a method comprising applying the formulation according to the invention to either soil or a plant to control nematode damage and/or increase crop yield.

### Examples

### General procedures:

Storage stability tests are performed by storing samples of the formulation in temperature controlled cabinets at 54°C, 45°C for accelerated storage testing or room temperature (approx. 22°C) for the required period of time and afterwards visually examining the physical appearance and measuring the particles size. Particle size measurements are made by laser diffraction and the 90 percentile diameter by volume (Dv90) recorded by which 90% of the particles by volume are below this value according to the Fraunhofer Diffraction model. Suitable instruments by example are the Malvern Mastersizer range (Malvern Instruments) and Horiba LA-300 particle size analyser (Horiba). Accelerated storage testing at elevated temperatures is used to illustrate differences between the stability of different recipes and to identify recipes with good and poor storage stability.

The following products and recipes were used for the examples:
Luna^{®} Privilege, which is a commercial suspension concentrate containing 500 g/l of Fluopyram.

**Table 5: Compositions**

| **Composition (g/l)** | **Recipe 1 (according to the invention)** | **Recipe 2 (comparative)** | **Recipe 3 (comparative)** |
|---|---|---|---|
| | Recipe | Example without high content of wetter (b) | Example with large particle size |
| Fluopyram (a) | 400 | 400 | 400 |
| Naphthalene sulphonate formaldehyde condensate Na salt (c) | 5 | 5 | 5 |
| Ethoxylated polymethacrylate (c) | 30 | 30 | 30 |
| PEO-PPO-PEO block copolymer Synperonic^{®} PE/F127 (Mw 12000, 70% EO) (b) | 50 | 20 | 50 |
| 1,2-Propyleneglycol (e) | 90 | 90 | 90 |
| SAG^{®} 1572 (e) | 3 | 3 | 3 |
| Surfynol^{®} 440 (c) | 5 | 5 | 5 |
| Geropon^{®} T 36 (c) | 10 | 10 | 10 |
| Biocides (e) | 2.4 | 2.4 | 2.4 |
| Xanthan (e) | 2.6 | 2.6 | 2.6 |
| Water | To vol (561.1) | To vol (591.1) | To vol (561.1) |

The recipes were prepared according to method 1. Mw = molecular weight.

### Results

**Table 6: Formulation Properties**

| | **Luna^{®} Privilege** | **Recipe 1** | **Recipe 2** | **Recipe 3** |
|---|---|---|---|---|
| Particle size (Dv90) | 5,9 µm | 2,5 µm | 2,5 µm | 9 µm |
| Synperonic^{®} PE/F 127 | - | 50g/l | 20g/l | 50g/l |

In an example Recipes 1 to 3 and Luna^{®} Privilege were applied to soil via drench at 250 g a.i./ha in 750 1/ha water and tomato plants were collected at intervals and assessed for efficacy against root damage caused by *Meloidogyne incognita.* The results are shown in table 7 and clearly show that Recipe 1 has the highest efficacy and demonstrates that both a small particle size (recipe 1 > recipe 3) and high level of Synperonic^{®} PE/F127 (recipe 1 > recipe 2) are important for excellent efficacy. Also demonstrated is the better performance of the recipe according to the invention (recipe 1) compared to the commercial foliar formulation Luna^{®} Privilege. Furthermore, good crop safety was observed for all recipes.

**Table 7: Efficacy of Recipes 1 to 3 and Luna^{®} Privilege in field tests**

| **Efficacy** % | **Luna**^{®} **Privilege** | **Recipe 1 according to the invention** | **Recipe 2** | **Recipe 3** |
|---|---|---|---|---|
| 31 DAA | 81 | 94 | 68 | 84 |
| 61 DAA | 61 | 82 | 49 | 54 |
| 108 DAA | 63 | 77 | 59 | 74 |

| | | | | |
|---|---|---|---|---|
| DAA = days after application. | | | | |

In further examples Recipe 1 and Luna^{®} Privilege were applied to soil via drip irrigation at 250 g a.i./ha in 2500 to 15000 1/ha water; vegetable plants were transplanted (tomato) resp. sown (cucumber) shortly after the application and later assessed for efficacy against root damage from *Meloidogyne incognita.* The results from these 4 trials are shown in table 8 and clearly show that Recipe 1 according to the invention has a consistently higher efficacy than Luna^{®} Privilege.

**Table 8: Efficacy of Recipe 1 and Luna Privilege in field tests.**

| **Efficacy %** | **Luna Privilege** | **Recipe 1 according to the invention** |
|---|---|---|
| 82 DAA Tomato | 0 | 64 |
| 58 DAA Tomato | 83 | 87 |
| 63-71 DAA Tomato | 65 | 71 |
| 54 DAA Cucumber | 55 | 68 |

| | | |
|---|---|---|
| DAA = days after application | | |

In another example the Synperonic^{®} PE/F127 PEO-PPO-PEO copolymer (b) in recipe 1 was replaced with 50g/l (at 100% equivalent content) of Genapol^{®} X080, an alcohol ethoxylate, Agnique^{®} PG8107, an alkyl polygluccoside, Crovol^{®} CR70G, a rape seed oil ethoxylate, Synergen^{®} W10, sodium dioctlysulfosuccinate and Silwet^{®} 408, an organosilicone super-spreader (details are provided in table 2). These were subjected to accelerated storage testing and the particle size measured. The results are shown in table 9 and show that the PEO-PPO-PEO block copolymer Synperonic^{®} PE/F127 results in a significantly lower level of crystal growth than all the other wetters which is important both for good biological efficacy and good physical stability during the shelf life of the product. In the case of the Synergen^{®} W10 the suspension was clearly unstable after 4W45 and had formed a thick paste resulting in an unusable formulation while the Synperonic^{®} PE/F127 remained a stable fluid suspension. This demonstrates the special performance obtained with the Synperonic^{®} PE/F127 PEO-PPO-PEO block copolymer (b) according to the invention.

**Table 9: Particle size and physical appearance after room temperature and accelerated storage with different components (b).**

| **Component (b)** | **Initial Dv90 (µm)** | **2W54 Dv90 (µm)** | **2W45 Dv90 (µm)** | **4WRT Dv90 (µm)** | **4W45 Physical appearance** |
|---|---|---|---|---|---|
| Synperonic^{®} PE/F 127 (according to the invention) | 2.5 | 4.6 | 3.0 | 2.5 | fluid suspension |
| Genapol^{®} X 080 | 2.5 | 13.4 | 8.3 | 3.7 | fluid suspension |
| Agnique^{®} PG8107 (70%) | 2.5 | 11.2 | 7.37 | 2.7 | fluid suspension |
| Crovol^{®} CR70G | 2.5 | 7.3 | 3.2 | 2.8 | fluid suspension |
| Synergen^{®} W10 (65%) | 2.5 | 23.5 | 14.4 | 3.0 | very thick paste |
| Silwet^{®} 408 | 2.5 | 13.2 | 7.0 | 3.3 | fluid suspension |

| | | | | | |
|---|---|---|---|---|---|
| RT = room temperature (23±2°C). | | | | | |

### Description of SC Milling Process

Grinding process trials were performed with an Eiger 250 Mini Motormill (Eiger Torrance) with 1.0 -1.25 mm glass beads at 80% bead charge. The pre-mill slurries were prepared by mixing all the components with the exception of the active ingredient until fully dissolved or dispersed. The active ingredient a) was then added to the pre-mill slurries during mixing with an ULTRA-TURRAX^{®} rotor-stator high shear mixer to decrease the particle size in the slurries to less the 50 µm . The pre-mill slurries were then ground in the Eiger 250 Mini Motormill in recirculation mode at 3200rpm until the required particle size was obtained. The remaining components in Table 10 were mixed until dissolved or dispersed with low shear to form a xanthan thickener gel and added to the slurries with low shear mixing until homogeneous.

Process 1 is a standard process where all the surfactants are added prior to milling, 150 g/l of water is added post milling for addition of the xanthan as an aqueous thickener gel.

Process 2 has 20 g/l of Synperonic^{®} PE/F127 removed from the pre-mill slurry and added post milling in the xanthan thickener gel while Process 3 has 30 g/l of Synperonic^{®} PE/F127 removed and added post milling in the xanthan thickener gel along with 200 g/l water. Tests performed at a small scale (~0.2 l).

**Table 10: Different milling processes for Recipe 1 - Pre-Mill slurry**

| **Composition for mill base (g/l of final product)** | **Process 1** | **Process 2** | **Process 3** |
|---|---|---|---|
| | Reference without any component (b) removed prior to milling | Recipe and process according to the invention | Recipe and process according to the invention |
| Fluopyram (a) | 400 | 400 | 400 |
| Naphthalene sulphonate formaldehyde condensate Na salt (c) | 5 | 5 | 5 |
| Ethoxylated polymethacrylate copolymer (c) | 30 | 30 | 30 |
| PEO-PPO-PEO block copolymer Synperonic^{®} PE/F127 (Mw 12000, 70% EO) (b) | **50** | **30** | **20** |
| 1,2-Propyleneglycol (e) | 90 | 90 | 90 |
| SAG 1572 (e) | 1 | 1 | 1 |
| Surfynol^{®} 440 (c) | 5 | 5 | 5 |
| Geropon^{®} T 36 (c) | 10 | 10 | 10 |
| Water | 411.1 | 411.1 | 361.1 |

**Table 11: Different milling processes for Recipe 1 - Post-Mill additions**

| **Components added after milling (g/l of final product)** | **Process 1** | **Process 2** according to the invention | **Process 3** according to the invention |
|---|---|---|---|
| PEO-PPO-PEO block copolymer Synperonic^{®} PE/F127 (Mw 12000, 70% EO) (b) | **0** | **20** | **30** |
| Biocide (e) | 2.6 | 2.6 | 2.6 |
| Xanthan (d) | 2.6 | 2.6 | 2.6 |
| SAG 1572 (e) | 2 | 2 | 2 |
| Water | 150 | 150 | 200 |

**Table 12: Milling performance according to the processes in table X**

| **Milling performance** | **Milling time to reduce the particle size Dv90 to 3.0 µm (minutes)** |
|---|---|
| Process 1 | 31 |
| Process 2 (according to the invention) | 18 |
| Process 3 (according to the invention) | 6 |

The results show that to achieve an efficient grinding of the particles it is important to remove 20 g/l, preferably 30 g/l of the component (b) Synperonic^{®} PE/F127 prior to milling and to add this after milling with the xanthan rheological thickener gel.

Using Process 3 the effect of grinding media bead size was determined with a larger sample size (~0.8 1).

**Table 13: Milling performance for Process 3 with different sizes of grinding media.**

| **Bead size** | **Milling time to reduce the particle size Dv90 to 3.0 µm (minutes)** |
|---|---|
| 1 to 1.25 mm | 26 |
| 0.5 to 0.75 mm (according to the invention) | 12 |
| 0.4 to 0.6 mm (according to the invention) | 6 |

The results show that to achieve the small size according to the invention at an acceptably efficient milling rate beads with a diameter less than 0.75mm, preferrably 0.6 mm are required.

### Extrapolation to Pilot Scale

In another example at a pre-production scale, 50 litres was prepared by Process 3 and ground in a Dyno^{®}-mill KD5 with a bead charge of 85% and a tip speed of 10 m/s. Two passes with 1.25 - 2 mm ZrO₂ (Y₂O₃ stabilised) beads followed by two passes with 0.8 - 1.25 mm ZrO₂ (Y₂O₃ stabilised) beads resulted in a Dv90 of 6.3 µm. A second example with one pass using 1.25 - 2 mm ZrO₂ (Y₂O₃ stabilised) beads followed by three passes with 0.4 - 0.6 mm glass beads resulted in a Dv90 of 3.3 µm. This demonstrates the importance of not only reducing the PEO-PPO-PEO block copolymer Synperonic^{®} PE/F127 (Mw 12000, 70% EO) content during milling but also of using grinding media of a small size.

## Claims

1. Suspension concentrate formulations containing a combination of a compound of formula (I) 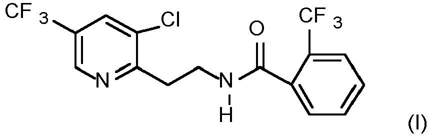 wherein compound (I) has a particle size Dv90 less than 5.0 µm and
b) at least one polyalkylene oxide block copolymer of formula (II) 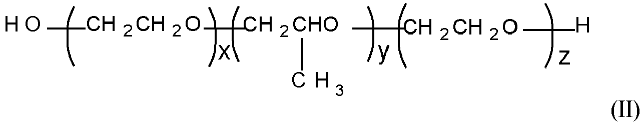 wherein in compound of formula (II)
x, z is 2 to 140 and
y is 15 to 80.

2. Suspension concentrate formulations according to Claim 1, **characterized in that** compound (I) has a particle size (Dv90) between 1.0 µm and 5.0 µm

3. Suspension concentrate formulations according to Claim 1, **characterized in that** compound of formula (II) has a molecular weight of 7,000 to 18,000 g/mol.

4. Suspension concentrate formulations according to Claim 1, **characterized in that** compound of formula (II) has an ethylene oxide content of 50 to 85%.

5. Suspension concentrate formulations according to Claim 1, **characterized in that** they comprise
c) one or more non-ionic surfactants or dispersing aids and/or at least one anionic surfactants or dispersing aids,
d) one or more rheological modifier and
e) one or more other formulants selected from the group comprising antifoam, biocide, antifreeze, colourant, pH-adjusters, buffers, stabilisers, crystal growth inhibitors or micronutirients.

6. Suspension concentrate formulations according to Claim 1 comprising 1 to 800 g/l of component a).

7. Suspension concentrate formulations according to Claim 1 comprising 30 to 500 g/l, preferably 35 to 200 g/l of component b).

8. Suspension concentrate formulations according to Claim 1 comprising 1 to 800 g/l, preferably 5 to 500 g/l of component c).

9. Process for the preparation of the formulation according to according to Claim 1 or 5, wherein
- in a first step a thickener gel is prepared by mixing a portion of about 100 to 250 g/l of water, the rheological modifier (d), biocides (e), all except 5 to 40 g/l of the copolymer (b) and a portion of about 0.5 to 3 g/l of the antifoam;
- in a second step a pre-mill slurry is prepared by mixing the components d), e) and 5 to 40 g/l of component b) in the remaining water,
- in a third step the component a) is added to the pre-mill slurry and mixed with a rotor-stator mixer until the particle size of component a) is less than 50 µm and
- in a fourth step the pre-mill slurry is ground in a bead mill containing grinding media g) with a bead size of 0.3 to 0.75 mm and
- in a fifth step the thickener gel prepared in the first step is added during mixing.

10. Process according to Claim 9, **characterized in that** the grinding media g) is selected from the group of glass, Zr doped glass, ceramic, Zr silicate, ZrO₂ (Y₂O₃ stabilised), ZrO₂ (CeO₂ stabilised), polymers, cross-linked polystyrene or steel.

11. method to control nematodes comprising applying the suspension concentrate formulations according to Claim 1 to either soil or a plant in crop protection.

12. Non-therapeutic use of the suspension concentrate formulations according to Claim 1 as nematicide.

## Patentansprüche

1. Suspensionskonzentratformulierungen, enthaltend eine Kombination von einer Verbindung der Formel (I) 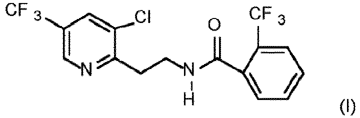 wobei Verbindung (I) eine Teilchengröße Dv90 von weniger als 5,0 µm aufweist, und
b) mindestens einem Polyalkylenoxid-Blockcopolymer der Formel (II) 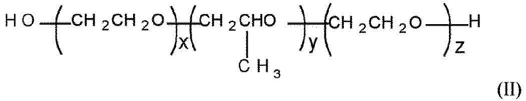 wobei in der Verbindung der Formel (II)
x und z für 2 bis 140 stehen und
y für 15 bis 80 steht.

2. Suspensionskonzentratformulierungen nach Anspruch 1, **dadurch gekennzeichnet, dass** die Verbindung (I) eine Teilchengröße (Dv90) zwischen 1, 0 µm und 5, 0 µm aufweist.

3. Suspensionskonzentratformulierungen nach Anspruch 1, **dadurch gekennzeichnet, dass** die Verbindung der Formel (II) ein Molekulargewicht von 7000 bis 18.000 g/mol aufweist.

4. Suspensionskonzentratformulierungen nach Anspruch 1, **dadurch gekennzeichnet, dass** die Verbindung der Formel (II) einen Ethylenoxidgehalt von 50 bis 85 % aufweist.

5. Suspensionskonzentratformulierungen nach Anspruch 1, **dadurch gekennzeichnet, dass** sie
c) ein oder mehrere nichtionische Tenside oder Dispergierhilfsmittel und/oder mindestens ein anionisches Tensid oder Dispergierhilfsmittel,
d) einen oder mehrere Rheologiemodifikatoren und
e) ein oder mehrere andere Formulierungsmittel, ausgewählt aus der Gruppe umfassend Antischaummittel, Biozide, Gefrierschutzmittel, Farbmittel, Mittel zur Einstellung des pH-Werts, Puffer, Stabilisatoren, Kristallwachstumsinhibitoren oder Mikronährstoffe,
umfassen.

6. Suspensionskonzentratformulierungen nach Anspruch 1, umfassend 1 bis 800 g/l Komponente a).

7. Suspensionskonzentratformulierungen nach Anspruch 1, umfassend 30 bis 500 g/l, vorzugsweise 35 bis 200 g/l, Komponente b).

8. Suspensionskonzentratformulierungen nach Anspruch 1, umfassend 1 bis 800 g/l, vorzugsweise 5 bis 500 g/l, Komponente c).

9. Verfahren zur Herstellung der Formulierung nach Anspruch 1 oder 5, bei dem
- in einem ersten Schritt durch Mischen einer Portion von etwa 100 bis 250 g/l Wasser, des Rheologiemodifikators (d), der Biozide (e), dem gesamten Copolymer (b) außer 5 bis 40 g/l davon und eine Portion von etwa 0,5 bis 3 g/l des Antischaummittels ein Verdickergel hergestellt wird;
- in einem zweiten Schritt durch Mischen der Komponenten d) und e) und 5 bis 40 g/l Komponente b) in dem verbliebenen Wasser eine Vormahlaufschlämmung hergestellt wird,
- in einem dritten Schritt die Komponente a) zu der Vormahlaufschlämmung gegeben und mit einem Rotor-Stator-Mischer gemischt wird, bis die Teilchengröße von Komponente a) weniger als 50 µm beträgt, und
- in einem vierten Schritt die Vormahlaufschlämmung in einer Perlmühle, die Mahlmedium (g) mit einer Perlengröße von 0,3 bis 0,75 mm enthält, gemahlen wird und
- in einem fünften Schritt das im ersten Schritt hergestellte Verdickergel während des Mischens zugegeben wird.

10. Verfahren nach Anspruch 9, **dadurch gekennzeichnet, dass** das Mahlmedium (g) aus der Gruppe Glas, Zrdotiertes Glas, Keramik, Zr-Silikat, ZrO₂ (Y₂O₃-stabilisiert), ZrO₂ (CeO₂-stabilisiert), Polymere, vernetztes Polystyrol oder Stahl ausgewählt wird.

11. Verfahren zur Bekämpfung von Nematoden, bei dem man die Suspensionskonzentratformulierungen nach Anspruch 1 im Pflanzenschutz entweder auf den Boden oder auf eine Pflanze aufbringt.

12. Nichttherapeutische Verwendung der Suspensionskonzentratformulierungen nach Anspruch 1 als Nematizid.

## Revendications

1. Formulations de concentré de suspension contenant une combinaison d'un composé de formule (I) 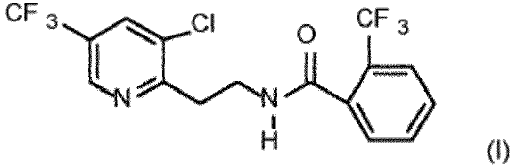 le composé (I) possédant une taille de particule Dv90 inférieure à 5,0 µm et
b) au moins un copolymère à blocs de poly(oxyde d'alkylène) de formule (II) 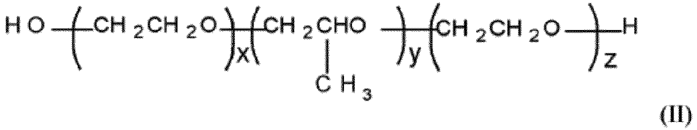 dans le composé de formule (II)
x, z étant de 2 à 140 et
y étant de 15 à 80.

2. Formulations de concentré de suspension selon la revendication 1, **caractérisées en ce que** le composé (I) possède une taille de particule (Dv90) comprise entre 1, 0 µm et 5, 0 µm.

3. Formulations de concentré de suspension selon la revendication 1, **caractérisées en ce que** le composé de formule (II) possède un poids moléculaire de 7 000 à 18 000 g/mole.

4. Formulations de concentré de suspension selon la revendication 1, **caractérisées en ce que** le composé de formule (II) possède une teneur en oxyde d'éthylène de 50 à 85 %.

5. Formulations de concentré de suspension selon la revendication 1, **caractérisées en ce qu'**elles comprennent
c) un ou plusieurs tensioactifs ou auxiliaires de dispersion non ioniques et/ou au moins un tensioactif ou auxiliaire de dispersion anionique,
d) un ou plusieurs modificateurs rhéologiques et
e) un ou plusieurs autres agents de formulation choisis dans le groupe comprenant un antimousse, un biocide, un antigel, un colorant, des agents d'ajustement du pH, des tampons, des stabilisants, des inhibiteurs de croissance cristalline et des micronutriments.

6. Formulations de concentré de suspension selon la revendication 1 comprenant 1 à 800 g/l de composant a).

7. Formulations de concentré de suspension selon la revendication 1 comprenant 30 à 500 g/l, préférablement 35 à 200 g/l de composant b).

8. Formulations de concentré de suspension selon la revendication 1 comprenant 1 à 800 g/l, préférablement 5 à 500 g/l de composant c).

9. Procédé pour la préparation de la formulation selon la revendication 1 ou 5,
- dans une première étape un gel épaississant étant préparé en mélangeant une portion d'environ 100 à 250 g/l d'eau, le modificateur rhéologique (d), des biocides (e), tout sauf 5 à 40 g/l du copolymère (b) et une portion d'environ 0,5 à 3 g/l de l'antimousse ;
- dans une deuxième étape une suspension de pré-broyage étant préparée en mélangeant les composants d), e) et 5 à 40 g/l de composant b) dans l'eau restante,
- dans une troisième étape le composant a) étant ajouté à la suspension de pré-broyage et mélangé avec un mélangeur rotor-stator jusqu'à ce que la taille de particule du composant a) soit inférieure à 50 µm et
- dans une quatrième étape la suspension de pré-broyage étant broyée dans un broyeur à billes contenant un milieu de broyage g) doté d'une taille de billes de 0,3 à 0,75 mm et
- dans une cinquième étape le gel épaississant préparé dans la première étape étant ajouté pendant le mélange.

10. Procédé selon la revendication 9, **caractérisé en ce que** le milieu de broyage g) est choisie dans le groupe composé par un verre, un verre dopé au Zr, une céramique, un silicate de Zr, du ZrO₂ (stabilisé par Y₂O₃), du ZrO₂ (stabilisé par CeO₂), des polymères, un polystyrène réticulé ou de l'acier.

11. Procédé pour lutter contre des nématodes comprenant l'application des formulations de concentré de suspension selon la revendication 1 soit au sol, soit à un végétal dans la protection de cultures.

12. Utilisation non thérapeutique des formulations de concentré de suspension selon la revendication 1 en tant que nématicide.
